# EUROPEAN PATENT APPLICATION

(11) **EP 3 193 102 A1**
(43) Date of publication of application: **19.07.2017**
(21) Application number: 15840108.3
(22) Date of filing: 28.08.2015
(51) Int. Cl.: F25B 1/00, F25B 40/00, F25B 43/00, F28D 9/00, F28F 3/08

(54) **HEAT EXCHANGE DEVICE**

(30) Priority: 12.09.2014 JP 2014186722
(71) Applicant: Panasonic Intellectual Property Management Co., Ltd., Osaka-shi, Osaka 540-6207 (JP)
(72) Inventor: KURODA, Kentaro, Osaka 540-6207 (JP); NODA, Yoshitoshi, Osaka 540-6207 (JP)
(74) Representative: Schwabe - Sandmair - Marx
(86) International application number: PCT/JP2015/004338
(87) International publication number: WO 2016/038830

(57) **Abstract**

A heat exchange device has a plate stack unit obtained by continuous stacking of a plurality of plates. This plate stack unit includes a condenser unit, an evaporator unit, and an internal heat exchange unit. The condenser unit is configured such that a passage for allowing a high pressure refrigerant to flow, and a passage for a heat medium for absorbing heat from the high pressure refrigerant are stacked between a set of plates among the plurality of plates. The evaporator unit is configured such that a passage for allowing a low pressure refrigerant to flow, and a passage for a heat medium for applying heat to the low pressure refrigerant are stacked between a set of plates among the plurality of plates. The internal heat exchange unit is configured such that a passage for allowing the high pressure refrigerant to flow, and a passage for allowing the low pressure refrigerant to flow are stacked between a set of plates among the plurality of plates.

## Description

### TECHNICAL FIELD

The present invention relates to a heat exchange device.

### BACKGROUND

Conventionally, there is known a heat pump system using a heat exchange device that performs heat exchange between a refrigerant and a coolant. Additionally, there is known a configuration in which an intermediate heat exchanger (IHX) that performs heat exchange between a high temperature and high pressure refrigerant obtained after condensation by a condenser and a low temperature and low pressure refrigerant obtained before suction into a compressor is provided in a heat exchange device.

Conventionally, there is proposed a configuration in which a condenser, a liquid tank, and an evaporator of a heat pump system are integrated (for example, PTL 1). Additionally, PTL 2 discloses a configuration in which a plate type heat exchanger is applied to an intermediate heat exchanger.

### Citation List

### Patent Literature

PTL 1: Unexamined Japanese Patent Publication No. H10-76837
PTL 2: PCT International Publication No. WO2012/153610

### SUMMARY

The present invention provides a heat exchange device in which while a plurality of components of the heat pump system are integrated, design change for adjusting volume of each component can be facilitated.

A heat exchange device according to an aspect of the present invention has a plate stack unit obtained by continuous stacking of a plurality of plates. This plate stack unit includes a condenser unit, an evaporator unit, and an internal heat exchange unit. The condenser unit is configured such that a passage for allowing a high pressure refrigerant to flow, and a passage for a heat medium for absorbing heat from the high pressure refrigerant are stacked between a set of plates among the plurality of plates. The evaporator unit is configured such that a passage for allowing a low pressure refrigerant to flow, and a passage for a heat medium for applying heat to the low pressure refrigerant are stacked between a set of plates among the plurality of plates. The internal heat exchange unit is configured such that a passage for allowing the high pressure refrigerant to flow, and a passage for allowing the low pressure refrigerant to flow are stacked between a set of plates among the plurality of plates.

According to this heat exchange device, while a plurality of components of the heat pump system are integrated, design for adjusting volume of each component can be easily changed.

### BRIEF DESCRIPTION OF DRAWINGS

FIG. 1 is a block diagram illustrating a configuration of a heat pump system including a heat exchange device according to an exemplary embodiment of the present invention.
FIG. 2 is a perspective view of the heat exchange device illustrated in FIG. 1.
FIG. 3 is an exploded perspective view of the heat exchange device illustrated in FIG. 2.
FIG. 4 is a block diagram illustrating another configuration of the heat pump system including the heat exchange device according to the exemplary embodiment of the present invention.

### DESCRIPTION OF EMBODIMENT

Prior to description of an exemplary embodiment of the present invention, problems of a conventional heat exchange device are briefly described. As described in PTL 1, a plurality of components of the heat pump system are integrated, so that it is possible to eliminate pipes between these components, and it is possible to reduce size of the system, and improve ease in assembling of the system.

On the other hand, in a heat pump system or the like which is mounted on a vehicle, optimum amounts of heat exchange in a condenser, an evaporator, and an intermediate heat exchanger are sometimes different according to each vehicle model or each option of a vehicle. In such a case, the amounts of heat exchange in the condenser, the evaporator, and the intermediate heat exchanger can be preferably adjusted at a low cost in development.

However, integrating a plurality of the components of the heat pump system is unlikely to be realized simultaneously with facilitating adjustment of the heat exchange amounts in the condenser, the evaporator, and the intermediate heat exchanger at the low cost in development.

For example, as described in PTL 1, in a case where a configuration in which a condenser, a liquid tank, and an evaporator are integrated is employed, when size of the condenser is attempted to be increased so as to increase a heat exchange amount, design of the condenser and design of a joint part between the condenser and other component need to be changed. Since the design of the joint part is changed, a development cost rises greatly.

Hereinafter, an exemplary embodiment of the present invention is described in detail with reference to drawings.

### [CONFIGURATION OF HEAT PUMP SYSTEM]

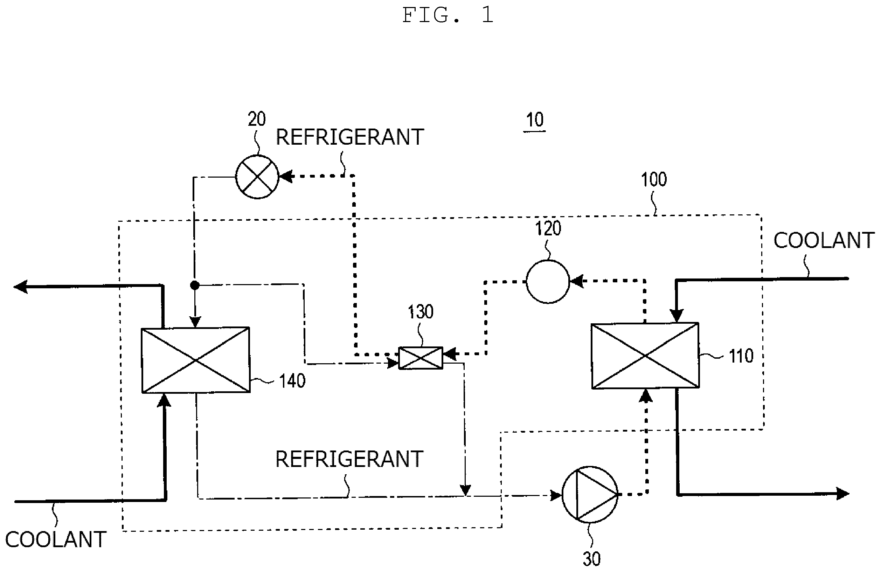

FIG. 1 is a block diagram illustrating a configuration of heat pump system 10 according to this exemplary embodiment.

Heat pump system 10 has condenser unit 110, liquid tank unit 120, internal heat exchange unit 130, expansion valve 20, evaporator unit 140, and compressor 30. In heat pump system 10 illustrated in FIG. 1, heat exchange device 100 has a structure in which condenser unit 110, liquid tank unit 120, internal heat exchange unit 130, and evaporator unit 140 are integrated.

Compressor 30 is disposed upstream of an inlet of a refrigerant of condenser unit 110, and expansion valve 20 is disposed upstream of inlets of the refrigerants of internal heat exchange unit 130 and evaporator unit 140.

Internal heat exchange unit 130 performs heat exchange between a high temperature and high pressure refrigerant (dashed arrow) flowing in from condenser unit 110 through liquid tank unit 120, and a low temperature and low pressure refrigerant (alternate long and short dash line arrow) flowing in from expansion valve 20. The respective refrigerants obtained after heat exchange in internal heat exchange unit 130 and evaporator unit 140 are merged to be suck in compressor 30.

### [CONFIGURATION OF HEAT EXCHANGE DEVICE 100]

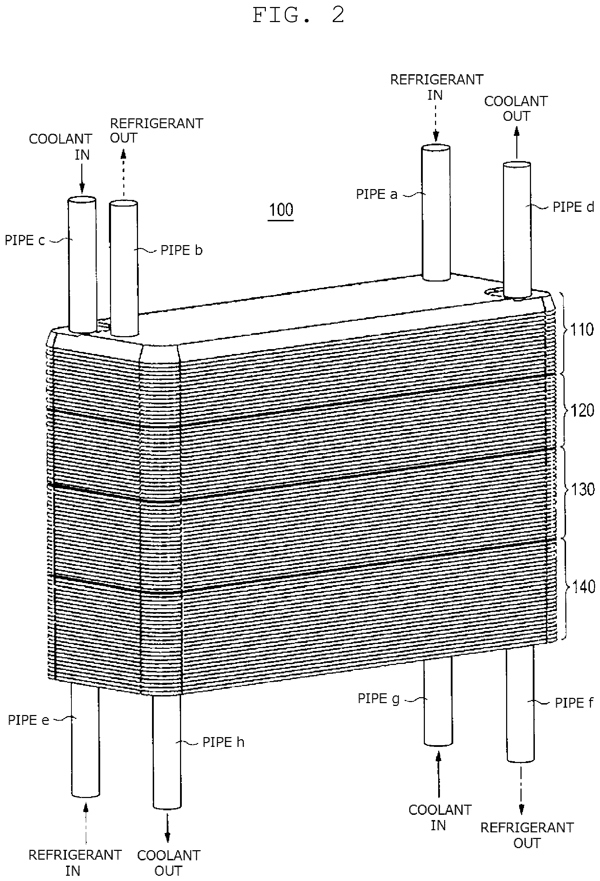

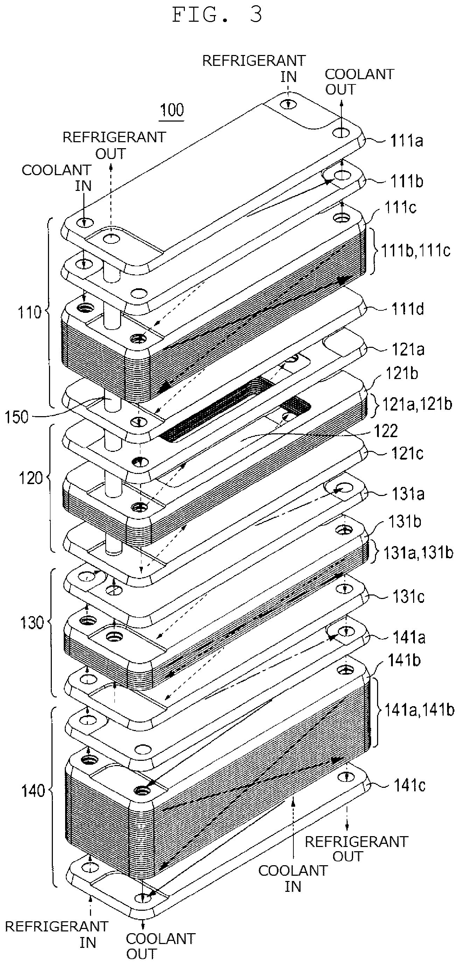

FIG. 2 is a perspective view illustrating a configuration of heat exchange device 100 used in heat pump system 10 illustrated in FIG. 1, and FIG. 3 is a perspective view illustrating a configuration in which a plurality of plates forming heat exchange device 100 in FIG. 2 are exploded.

As illustrated in FIG. 2 and FIG. 3, heat exchange device 100 has a plate stack unit in which a plurality of the plates are continuously stacked. Condenser unit 110, liquid tank unit 120, internal heat exchange unit 130, and evaporator unit 140 are composed of different sets of plates among the plurality of plates in the plate stack unit., respectively More specifically, in heat exchange device 100, condenser plates 111a to 111d, IHXs plates 131a to 131c, and evaporator plates 141a to 141c are stacked in the same stacking direction, so that condenser unit 110, internal heat exchange unit 130, and evaporator unit 140 are formed. Additionally, liquid tank plates 121a to 121c are stacked in the above same stacking direction, so that liquid tank unit 120 is formed.

Hereinafter, condenser plates 111a to 111d, liquid tank plates 121a to 121c, IHX plates 131a to 131c, and evaporator plates 141a to 141c are referred to as a plurality of condenser plates 111, a plurality of liquid tank plates 121, a plurality of IHX plates 131, and a plurality of evaporator plates 141, respectively.

That is, condenser unit 110 is composed of condenser plates 111, liquid tank unit 120 is composed of liquid tank plates 121, internal heat exchange unit 130 is composed of IHX plates 131, and evaporator unit 140 is composed of evaporator plates 141.

These plurality of plates have substantially the same dimension (thickness) in the stacking direction. That is, in heat exchange device 100, each of a plurality of condenser plates 111, each of a plurality of liquid tank plates 121, each of a plurality of IHX plates 131, and each of a plurality of evaporator plates 141 have substantially the same dimension in the stacking direction.

These plurality of plates have the same size and the same outer shape. For example, each of a plurality of condenser plates 111, each of a plurality of liquid tank plates 121, each of a plurality of IHX plates 131, and each of a plurality of evaporator plates 141 have the same dimension and the same contour line projected orthogonal to a surface perpendicular to the stacking direction.

As illustrated in FIG. 2, in heat exchange device 100, pipe a for allowing a high temperature and high pressure refrigerant compressed by compressor 30 to flow into condenser unit 110, and pipe b for allowing a refrigerant obtained after heat exchange in condenser unit 110 and internal heat exchange unit 130 to be discharged to expansion valve 20 are connected to an upper part of condenser unit 110. Additionally, pipe c for allowing a coolant to flow into condenser unit 110, and pipe d for allowing a coolant obtained after heat exchange in condenser unit 110 are connected to the upper part of condenser unit 110.

Pipe e for allowing a low temperature and low pressure refrigerant expanded by expansion valve 20 to flow into evaporator unit 140 and internal heat exchange unit 130, and pipe f for allowing a refrigerant obtained after heat exchange in evaporator unit 140 and internal heat exchange unit 130 to be discharged to compressor 30 are connected to a lower part of evaporator unit 140. Pipe g for allowing a coolant to flow into evaporator unit 140, and pipe h for allowing a coolant obtained after heat exchange in evaporator unit 140 to be discharged are connected to the lower part of evaporator unit 140.

### <CONFIGURATION OF CONDENSER UNIT 110>

Condenser unit 110 performs heat exchange between a high temperature and high pressure refrigerant sent from compressor 30 and a coolant, so that the refrigerant is condensed. The coolant is an antifreezing solution such as an LLC (Long Life Coolant), and liquid for transporting heat.

As illustrated in FIG. 3, condenser unit 110 has a plurality of condenser plates 111 which are stacked. Condenser unit 110 is configured such that passages for allowing a high pressure refrigerant to flow (refrigerant passages), and passages for a coolant for absorbing heat from the high pressure refrigerant (coolant passages) are stacked between the plurality of stacked condenser plates 111. More specifically, as illustrated in FIG. 3, condenser plates 111a to 111d are stacked, so that the refrigerant passages and the coolant passages are alternately formed between the plurality of condenser plates 111. The refrigerant and the coolant pass through the refrigerant passages and the coolant passages respectively without being mixed with each other. The refrigerant and the coolant pass through the refrigerant passages and the coolant passages respectively in opposite directions to each other. Thus, in condenser unit 110, the refrigerant passes through the refrigerant passages, and the coolant passes through the coolant passages, so that heat exchange between the refrigerant and the coolant is performed, and the refrigerant is condensed.

The coolant that passes through condenser unit 110 is discharged from the upper part of condenser unit 110 to pipe d. On the other hand, the refrigerant that passes through condenser unit 110 flows into liquid tank unit 120.

FIG. 3 illustrates a case where the refrigerant and the coolant pass through the refrigerant passages and the coolant passages respectively in the opposite directions to each other. However, the present invention is not limited to this, and the refrigerant and the coolant may pass through the refrigerant passages and the coolant passages in the same direction, respectively.

In a design phase of heat exchange device 100, numbers of condenser plates 111b and condenser plates 111c to be alternately stacked are adjusted, so that size of condenser unit 110 (area of heat exchange unit) is adjusted.

### <CONFIGURATION OF LIQUID TANK UNIT 120>

Liquid tank unit 120 holds the refrigerant that flows in from condenser unit 110, and performs gas-liquid separation of the refrigerant and adjustment of a refrigerant amount.

As illustrated in FIG. 3, liquid tank unit 120 has a plurality of stacked liquid tank plates 121. Liquid tank plates 121a, 121b each have a window frame shape having a hole at a center. A plurality of liquid tank plates 121 are stacked so as to be continuous to a plurality of condenser plates 111. Consequently, liquid tank unit 120 is stacked on condenser unit 110 in the same direction as the stacking direction of condenser plates 111.

As illustrated in FIG. 3, in liquid tank unit 120, refrigerant retaining unit 122 that is a space leading to the passage (outlet) for the refrigerant of condenser unit 110 is formed inside the plurality of stacked liquid tank plates 121. That is, in liquid tank unit 120, the space leading to the outlet of the high pressure refrigerant of condenser unit 110 is formed between the plurality of liquid tank plates 121 or through liquid tank plates 121.

More specifically, side surfaces of refrigerant retaining unit 122 are formed by a plurality of stacked liquid tank plates 121a, 121b, an upper surface of refrigerant retaining unit 122 is formed by a lowermost plate (condenser plate 111d) of condenser unit 110, and a bottom surface of refrigerant retaining unit 122 is formed by liquid tank plate 121c.

In the refrigerant flowing from condenser unit 110, a gas phase refrigerant is sometimes mixed in addition to a liquid phase refrigerant. Refrigerant retaining unit 122 performs gas-liquid separation of the refrigerant to move the gas phase refrigerant vertically upward, and move the liquid phase refrigerant vertically downward. Accordingly, a lower part of refrigerant retaining unit 122 becomes a holding unit for the liquid phase refrigerant. The holding unit for the liquid phase refrigerant in refrigerant retaining unit 122 leads to a passage for a refrigerant of internal heat exchange unit 130.

In a design phase of heat exchange device 100, numbers of liquid tank plates 121a and liquid tank plates 121b to be alternately stacked are adjusted, so that size (volume) of liquid tank unit 120 is adjusted.

### <CONFIGURATION OF INTERNAL HEAT EXCHANGE UNIT 130>

Internal heat exchange unit 130 performs heat exchange between a refrigerant that flows in from condenser unit 110 through liquid tank unit 120 and a refrigerant that flows in from expansion valve 20 through evaporator unit 140. After the heat exchange in internal heat exchange unit 130, the refrigerant that flows in from condenser unit 110 is discharged to expansion valve 20, and the refrigerant that flows in from expansion valve 20 is sucked in compressor 30. Thus, in internal heat exchange unit 130, heat exchange between the high temperature and high pressure refrigerant that flows in from condenser unit 110 and the low temperature and low pressure refrigerant sucked in compressor 30 is performed.

As illustrated in FIG. 3, internal heat exchange unit 130 has a plurality of stacked IHX plates 131. The plurality of IHX plates 131 are stacked so as to be continuous to a plurality of condenser plates 111 and a plurality of liquid tank plates 121. Consequently, internal heat exchange unit 130 is stacked on liquid tank unit 120 stacked on condenser unit 110 in the same direction as the stacking directions of condenser plates 111 and liquid tank plates 121.

Internal heat exchange unit 130 is configured such that first refrigerant passages (dashed arrow) for allowing a high pressure refrigerant flowing from condenser unit 110 (liquid tank unit 120) to flow, and second refrigerant passages (alternate long and short dash line arrow) for allowing a low pressure refrigerant flowing from expansion valve 20 (evaporator unit 140) to flow are stacked between the plurality of stacked IHX plates 131. More specifically, as illustrated in FIG. 3, IHX plates 131a, 131b are stacked, so that the first refrigerant passages and the second refrigerant passages are alternately formed between the plurality of IHX plates 131. The refrigerant from condenser unit 110 and the refrigerant from expansion valve 20 pass through the first refrigerant passages and the second refrigerant passages respectively without being mixed with each other. The refrigerant from condenser unit 110 and the refrigerant from expansion valve 20 pass through the first refrigerant passages and the second refrigerant passages respectively in opposite directions to each other. Thus, in internal heat exchange unit 130, the refrigerant from condenser unit 110 passes through the first refrigerant passages, the refrigerant from the expansion valve 20 passes through the second refrigerant passages, so that heat exchange between the high pressure refrigerant and the low pressure refrigerant is performed.

The refrigerant that passes through the first refrigerant passages of internal heat exchange unit 130 passes through pipe 150 to be discharged from the upper part of condenser unit 110 to expansion valve 20 through pipe b. On the other hand, the refrigerant that passes through the second refrigerant passages of internal heat exchange unit 130 is merged with the refrigerant that passes through evaporator unit 140 to be discharged to compressor 30 through pipe f.

In a design phase of heat exchange device 100, numbers of IHX plates 131a and IHX plates 131b to be alternately stacked are adjusted, so that size of internal heat exchange unit 130 (area of heat exchange unit) is adjusted.

### <CONFIGURATION OF EVAPORATOR UNIT 140>

Heat exchange is performed between a low temperature and low pressure refrigerant sent from expansion valve 20 and a coolant is performed, so that evaporator unit 140 evaporates the refrigerant. A passage for the refrigerant flowing from expansion valve 20 through pipe e is branched into evaporator unit 140 and internal heat exchange unit 130.

As illustrated in FIG. 3, evaporator unit 140 has a plurality of stacked evaporator plates 141. Evaporator unit 140 is configured such that passages for allowing a low pressure refrigerant to flow (refrigerant passages), and passages for a coolant for applying heat to the low pressure refrigerant (coolant passages) are stacked between the plurality of stacked evaporator plates 141. More specifically, as illustrated in FIG. 3, evaporator plates 141a, 141b are stacked, so that the refrigerant passages and the coolant passages are alternately formed between the plurality of evaporator plates 141. The refrigerant and the coolant pass through the refrigerant passages and the coolant passages respectively without being mixed with each other. The refrigerant and the coolant pass through the refrigerant passages and the coolant passages respectively in opposite directions to each other. Thus, in evaporator unit 140, the refrigerant passes through the refrigerant passages, and the coolant passes through the coolant passages, so that heat exchange between the refrigerant and the coolant is performed, and the refrigerant is evaporated.

The coolant that passes through evaporator unit 140 is discharged from the lower part of evaporator unit 140 to pipe h. On the other hand, the refrigerant that passes through evaporator unit 140 and internal heat exchange unit 130 is discharged from the lower part of evaporator unit 140 to compressor 30 through pipe f.

FIG. 3 illustrates a case where the refrigerant and the coolant pass through the refrigerant passages and the coolant passages respectively in the opposite directions to each other. However, the present invention is not limited to this, and the refrigerant and the coolant may pass through the refrigerant passages and the coolant passages in the same direction, respectively.

In a design phase of heat exchange device 100, numbers of evaporator plates 141a and evaporator plates 141b to be alternately stacked are adjusted, so that size of evaporator unit 140 (area of heat exchange unit) is adjusted.

As described above, the configuration of heat exchange device 100 is described.

Thus, in heat exchange device 100 according to this exemplary embodiment, a plurality of condenser plates 111, a plurality of IHX plates 131, and a plurality of evaporator plates 141 are stacked in the same stacking direction, so that condenser unit 110, internal heat exchange unit 130, and evaporator unit 140 are each configured. Furthermore, liquid tank plates 121a to 121c are stacked, so that liquid tank unit 120 is configured.

In other words, heat exchange device 100 has the plate stack unit in which a plurality of the plates are continuously stacked. This plate stack unit includes condenser unit 110, evaporator unit 140, and internal heat exchange unit 130. Condenser unit 110 is configured such that the passages for allowing a high pressure refrigerant to flow, and the passages for a heat medium for absorbing heat from the high pressure refrigerant are stacked between a set of plates among the plurality of plates. Evaporator unit 140 is configured such that the passages for allowing a low pressure refrigerant to flow, and the passages for the heat medium for applying heat to the low pressure refrigerant are stacked between a set of plates among the plurality of plates. Internal heat exchange unit 130 is configured such that the passages for allowing a high pressure refrigerant to flow, and the passages for allowing the low pressure refrigerant to flow are stacked between a set of plates among the plurality of plates.

That is, in heat exchange device 100, internal heat exchange unit 130 is integrally formed with condenser unit 110 and evaporator unit 140. Therefore, a pipe for passing outside of condenser unit 110 or outside of evaporator unit 140 to connect internal heat exchange unit 130 to condenser unit 110 or evaporator unit 140 is not required to provide internal heat exchange unit 130.

Furthermore, in heat exchange device 100, condenser unit 110, liquid tank unit 120, internal heat exchange unit 130, and evaporator unit 140 are integrally formed, and therefore it is possible to eliminate pipes for passing through these integrated components to connect the plurality of components, sealing, or the like, there is no fear of leakage at joint portion, and it is possible to suppress a manufacturing cost.

In heat exchange device 100 having such a structure, a number of each of condenser plates 111, liquid tank plates 121, IHX plates 131 and evaporator plates 141 to be stacked is adjusted in response to, for example, performance of a heat pump system and restriction of a placement space, so that it is possible to individually adjust size of condenser unit 110, liquid tank unit 120, internal heat exchange unit 130 and evaporator unit 140.

Therefore, according to this exemplary embodiment, while a plurality of components of heat pump system 10 are integrated, design change for adjusting volume of each component can be facilitated.

Furthermore, in heat exchange device 100, condenser plates 111, liquid tank plates 121, IHX plates 131 and evaporator plates 141 each have substantially the same dimension (thickness) in the stacking direction. Additionally, condenser plates 111, liquid tank plates 121, IHX plates 131 and evaporator plates 141 each have the same outline shape. Accordingly, heat exchange device 100 can be manufactured at a low cost by a general method for manufacturing a plate-type heat exchanger.

As long as the plurality of plates configuring heat exchange device 100 can be stacked, the plurality of plates may have different outline shapes, or may have different dimensions in the stacking direction.

In heat exchange device 100, condenser unit 110 (and liquid tank unit 120), internal heat exchange unit 130, and evaporator unit 140 are arrayed in order of condenser unit 110 (and liquid tank unit 120), internal heat exchange unit 130, and evaporator unit 140. That is, internal heat exchange unit 130 is formed between condenser unit 110 (and liquid tank unit 120) and evaporator unit 140. Thus, in heat exchange device 100, it is possible to simplify a route inside these integrated components, the route being used for allowing a high pressure refrigerant and a low pressure refrigerant to be heat-exchanged in internal heat exchange unit 130 to flow into internal heat exchange unit 130.

In FIG. 2 and FIG. 3, in heat exchange device 100, condenser unit 110, liquid tank unit 120, internal heat exchange unit 130, and evaporator unit 140 are arrayed in this order. However, the order of the components stacked in heat exchange device 100 is not limited to this. For example, condenser unit 110, liquid tank unit 120, evaporator unit 140, internal heat exchange unit 130 may be arrayed in this order.

In this exemplary embodiment, heat exchange device 100 has liquid tank unit 120. However, heat exchange device 100 may not have liquid tank unit 120. That is, heat exchange device 100 only needs to have at least condenser unit 110, internal heat exchange unit 130 and evaporator unit 140. In this case, a tank-shaped liquid tank unit may be added to outside of heat exchange device 100 having condenser unit 110, internal heat exchange unit 130 and evaporator unit 140.

FIG. 2 illustrates a state of placement of heat exchange device 100 in which the upper part of condenser unit 110 is directed vertically upward, and the lower part of evaporator unit 140 is directed vertically downward. However, placement during use of heat exchange device 100 is not limited to this.

In this exemplary embodiment, as an example of the heat medium exchanging heat with the refrigerant, a coolant (water) is used. However, as the heat medium, oil or air may be used in place of the coolant.

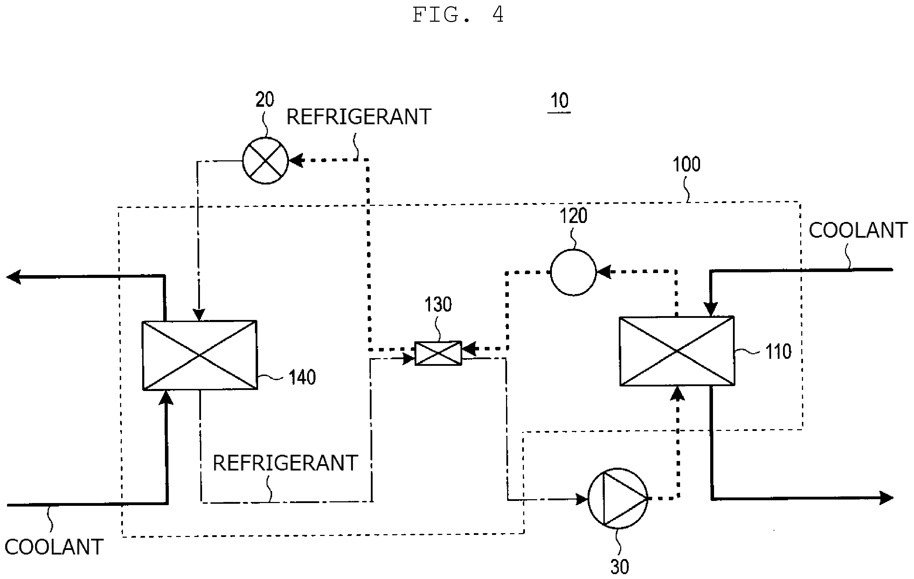

In FIG. 1, a configuration in which the refrigerant from expansion valve 20 flows in internal heat exchange unit 130 and evaporator unit 140 in parallel (parallel configuration) is described. However, the configuration of heat exchange device 100 is not limited to this. For example, as illustrated in FIG. 4, the configuration of heat exchange device 100 may be a configuration in which the refrigerant obtained after passing through evaporator unit 140 flows in internal heat exchange unit 130 (serial configuration).

FIG. 3 illustrates a case where refrigerant retaining unit 122 of liquid tank unit 120 is formed by a plurality of liquid tank plates 121 each having the window frame shape having the hole at the center. However, liquid tank plates 121 do not always need to have the window frame shape having the hole. Liquid tank plates 121 may have a plate shape having no hole, just like condenser plates 111, IHX plates 131, or evaporator plates 141. In a case where each liquid tank plate 121 is formed with no hole, a passage (space) leading to the outlet of the high pressure refrigerant of condenser unit 110 is formed between a plurality of liquid tank plates 121, and this passage can hold the refrigerant.

FIG. 3 illustrates a case where liquid tank unit 120 is configured by stacking of a plurality of liquid tank plates 121. However, liquid tank unit 120 may have a configuration of an integrated block shape having a housing space (equivalent to refrigerant retaining unit 122) inside the block shape, in place of a plurality of the stacked plates. An outline shape and size of block shaped liquid tank unit 120 may be different from an outline shape and size of each of condenser unit 110, internal heat exchange unit 130 and evaporator unit 140, as viewed in the stacking direction.

Additionally, the outline shape and the size of each of condenser unit 110, internal heat exchange unit 130 and evaporator unit 140 as viewed in the stacking direction may be different from an outline shape and size of other components.

### INDUSTRIAL APPLICABILITY

The present invention can be applied to a cooling and heating device mounted on a vehicle.

### REFERENCE MARKS IN THE DRAWINGS

10: heat pump system
20: expansion valve
30: compressor
100: heat exchange device
110: condenser unit
111, 111a, 111b, 111c, 111d: condenser plate
120: liquid tank unit
121, 121a, 121b, 121c: liquid tank plate
122: refrigerant retaining unit
130: internal heat exchange unit
131, 131a, 131b, 131c: IHX plate
140: evaporator unit
141, 141a, 141b, 141c: evaporator plate
150: pipe

## Claims

1. A heat exchange device comprising a plate stack unit configured by a plurality of plates which are continuously stacked,
wherein the plate stack unit has:
a condenser unit configured such that a passage for allowing a high pressure refrigerant to flow, and a passage for a heat medium for absorbing heat from the high pressure refrigerant are stacked between one set of plates among the plurality of plates;
an evaporator unit configured such that a passage for allowing a low pressure refrigerant to flow, and a passage for a heat medium for applying heat to the low pressure refrigerant are stacked between another set of plates among the plurality of plates; and
an internal heat exchange unit configured such that a passage for allowing the high pressure refrigerant to flow, and a passage for allowing the low pressure refrigerant to flow are stacked between still another set of plates among the plurality of plates.

2. The heat exchange device according to claim 1, wherein
the condenser unit, the internal heat exchange unit, and the evaporator unit are arrayed in order of the condenser unit, the internal heat exchange unit, and the evaporator unit.

3. The heat exchange device according to claim 1, further comprising a liquid tank unit provided with a space leading to an outlet of the high pressure refrigerant of the condenser unit, between another set of plates among the plurality of plates or through the another set of plates among the plurality of plates.

4. The heat exchange device according to claim 3, wherein
the condenser unit, the liquid tank unit, the internal heat exchange unit, and the evaporator unit are arrayed in order of the condenser unit, the liquid tank unit, the internal heat exchange unit, and the evaporator unit.

5. The heat exchange device according to claim 1, wherein
the heat medium is any of a coolant, oil, and air.

6. The heat exchange device according to claim 1, wherein
the plurality of plates are identical in size and in outer shape.
